# FASCICULE DE BREVET EUROPEEN

(11) **EP 1 293 371 B1**
(45) Date de publication et mention de la délivrance du brevet: **18.10.2006**
(21) Numéro de dépôt: 02292141.5
(22) Date de dépôt: 29.08.2002
(51) Int. Cl.: B60J 7/185

(54) **Ensemble de liaison et véhicule automobile correspondant**
Verbindungsanordnung und entsprechendes Kraftfahrzeug
Connecton assembly and corresponding motor vehicle

(30) Priorité: 13.09.2001 FR 0111876
(43) Date de publication de la demande: 19.03.2003
(73) Titulaire: Wagon Automotive S.A., 78306 Poissy (FR)
(72) Inventeur: Bon, Benoît, 78121 Crespieres (FR)
(74) Mandataire: Jacobson, Claude

(56) Documents cités:
- EP-A- 0 566 061
- US-A- 5 435 615

## Description

La présente invention concerne un ensemble de liaison libérable selon le préambule de la revendication 1.

Un tel ensemble est décrit dans le EP-A-0566061.

Dans les véhicules automobiles décapotables, le toit est soit articulé sur une partie arrière du châssis du véhicule, soit fixé de façon amovible sur le châssis.

Dans le cas des véhicules à toit amovible, la liaison entre le toit et le châssis est difficile à manipuler et peu stable.

L'invention a pour but de pallier cet inconvénient et de proposer un dispositif qui permette une liaison stable entre une partie d'un toit amovible et le châssis du véhicule.

A cet effet, l'invention a pour objet un ensemble du type précité, caractérisé par les caractéristiques de la revendication 1.

Suivant des modes de réalisation particuliers, l'invention comporte l'une ou plusieurs des caractéristiques énoncées dans les sous-revendications 2 à 15.

L'invention a en outre pour objet un véhicule automobile comprenant un châssis et un arc de toit amovible, caractérisé en ce que l'arc de toit est relié au châssis au moyen d'un ensemble de liaison tel que défini ci-dessus.

L'invention sera mieux comprise à la lecture de la description qui va suivre, donnée uniquement à titre d'exemple, et faite en se référant aux dessins, sur lesquels :
- la Figure 1 est une vue schématique de côté d'un véhicule automobile comprenant un ensemble selon l'invention ;
- La Figure 1A est le détail IA de la Figure 1 à plus grande échelle ;
- la Figure 2 est une vue en perspective éclatée de l'ensemble de liaison selon l'invention ;
- la Figure 3 est une vue en coupe de l'ensemble de la Figure 2, à l'état déverrouillé ;
- la Figure 4 est une vue de l'ensemble de 1a Figure 2 dans une configuration intermédiaire ; et
- la Figure 5 est une vue analogue à celle de la Figure 3, l'ensemble étant à l'état verrouillé.

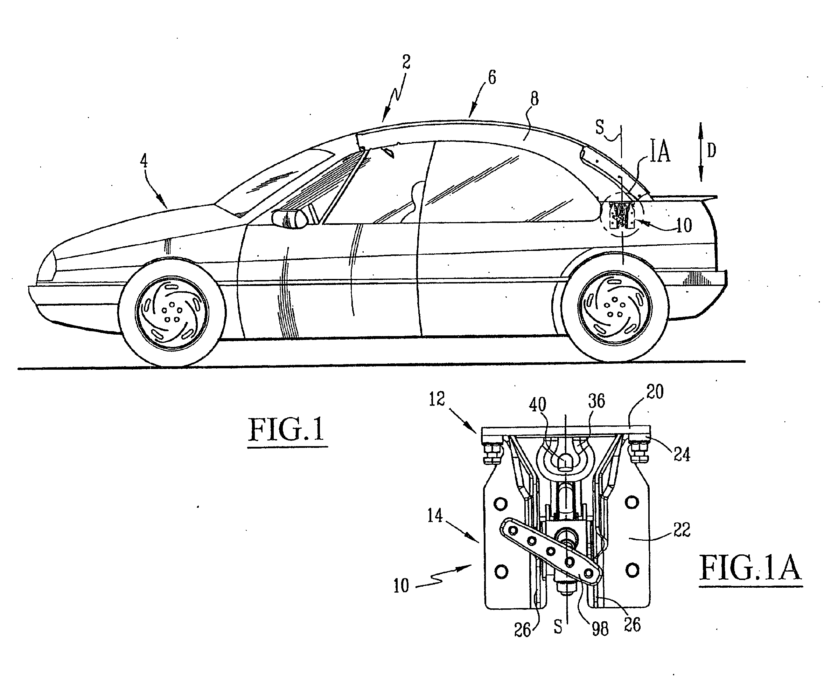

Sur la Figure 1 est représenté un véhicule automobile 2 comprenant un châssis 4 et un toit 6. Dans ce qui suit, les expressions « avant » et « arrière » seront utilisées par rapport au sens d'avancement normal du véhicule.

Le toit 6 comprend deux arcs de toit 8, droite et gauche, dont l'arc gauche est visible sur la Figure 1. Les arcs 8 sont disposés latéralement de part et d'autre du véhicule et s'étendent du pare-brise vers une partie située entre le siège arrière et le coffre. Chacun des deux arcs 8 est lié à l'arrière au châssis 4 par un ensemble de liaison 10. Les arcs 8 sont fixés au châssis 4 de façon libérable, c'est-à-dire que lorsque le toit est indésirable, le toit 6 peut être désolidarisé et retiré complètement du châssis 4 par les deux ensembles de liaison 10.

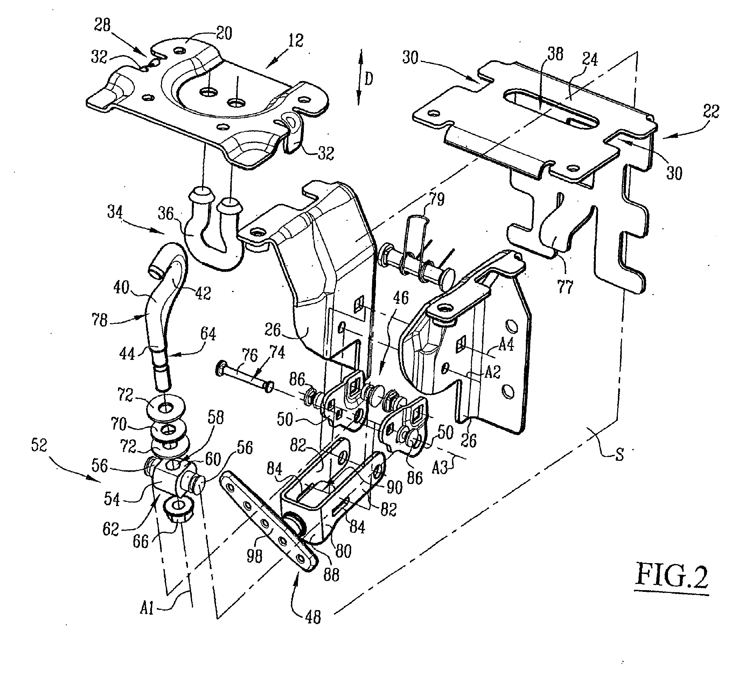

L'ensemble de liaison 10 est représenté plus en détail sur la Figure 2.

Comme on le voit sur la Figure 1A, l'ensemble 10 est sensiblement symétrique par rapport à un plan de symétrie S situé transversalement par rapport au véhicule à l'état monté.

Les expressions « latéral» et « central» seront utilisées par rapport à ce plan S.

L'ensemble de liaison 10 comprend deux ferrures complémentaires 12, 14. La première ferrure 12 est une plaque d'appui 20 fixée sur l'arc de toit 8 et la seconde ferrure 14 constitue un boîtier 22 fixé sur le châssis 4 du véhicule et comprenant un plateau horizontal 24 d'appui pour la plaque 20. Le boîtier comprend en outre deux parois latérales 26 parallèles l'une à l'autre, et s'étendant parallèlement au plan S.

Lors de la mise en place de l'arc de toit 8 ou lors de son retrait, la plaque d'appui 20 est mobile par rapport au plateau d'appui 24 selon une direction de déplacement D verticale (voir Figure 1).

La plaque d'appui 20 et le plateau d'appui 24 comportent des moyens de positionnement complémentaires 28 représentés sur la Figure 2. Ces moyens de positionnement 28 sont formés par des encoches latérales 30 ménagées dans le plateau d'appui 24, ainsi que des languettes latérales 32 portées par la plaque d'appui 20 et adaptées pour s'engager dans les encoches 30. Les languettes 32 sont venues de matière avec la plaque d'appui 20 et sont rabattues en s'étendant parallèlement au plan de symétrie S.

L'ensemble de liaison 10 comprend en outre des moyens 34 de liaison et de verrouillage des deux ferrures 12, 14 lorsque l'arc de toit 8 est lié au châssis 4. Les moyens de verrouillage 34 comprennent un organe d'accrochage, constitué d'un oeillet 36 formant une boucle. Cet oeillet 36 est un fil de fer en forme de U fixé sur la partie centrale de la plaque d'appui 20. Dans la position montée de l'arc de toit 8, l'oeillet 36 s'étend verticalement vers le bas à travers une ouverture 38 ménagée dans le plateau d'appui 24.

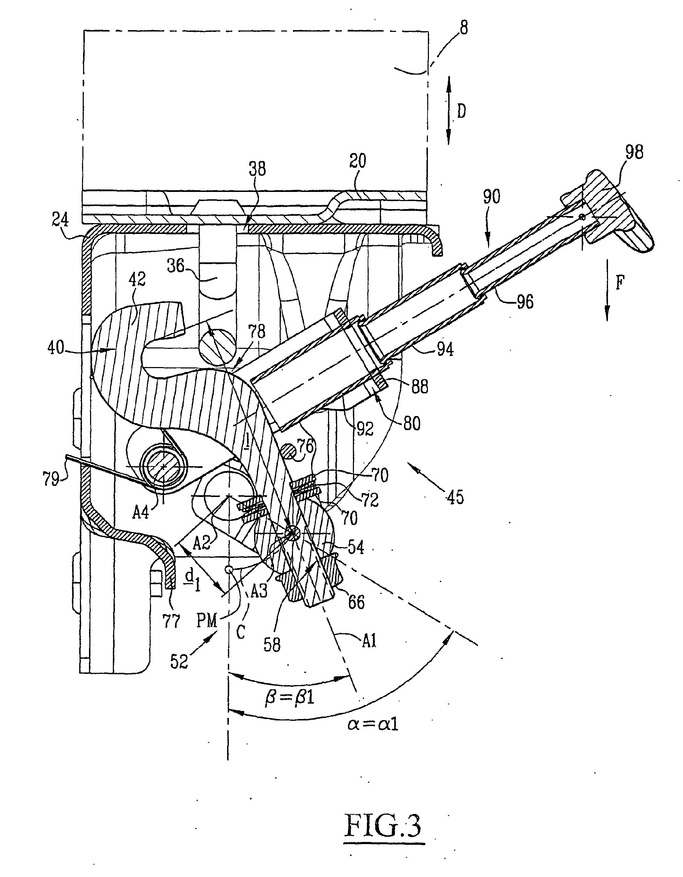

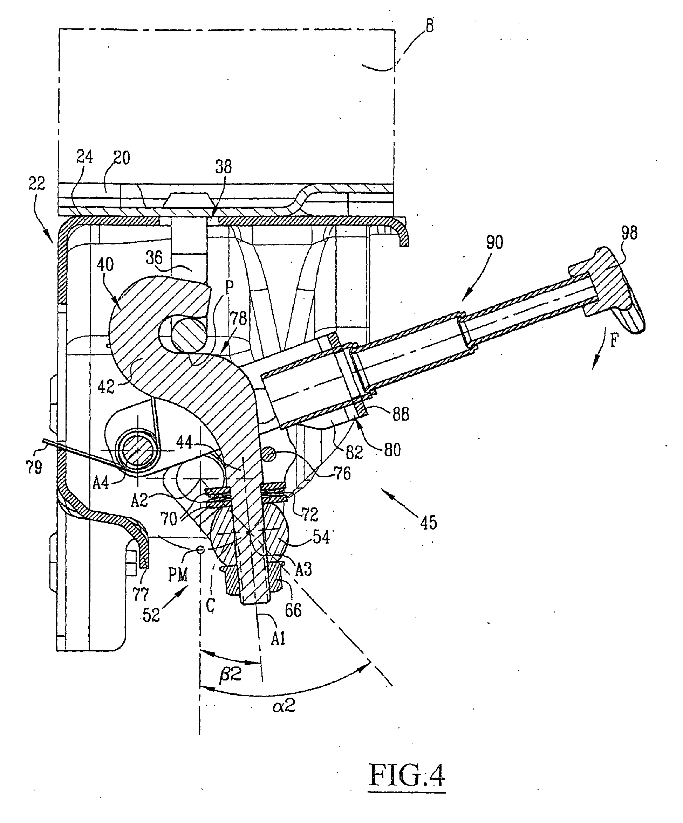

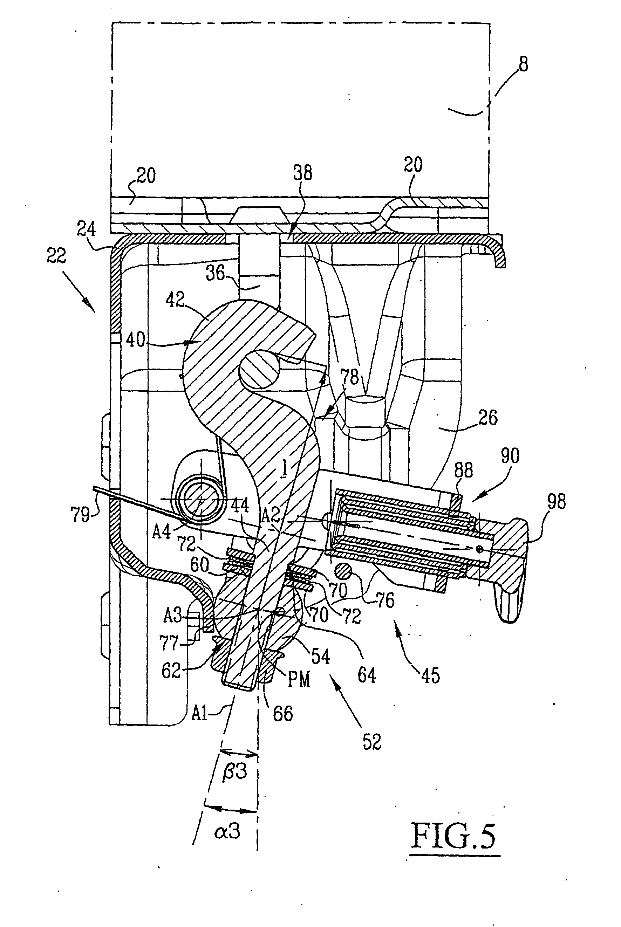

En outre, les moyens de verrouillage 34 comprennent un crochet 40 relié au boîtier 22 et mobile par rapport à celui-ci. Le crochet 40 est constitué d'une portion 42 en forme de crosse et d'un prolongement cylindrique 44 ayant un premier axe A1. Le crochet 40 est mobile dans le plan S par rapport au boîtier 22 entre une position de déverrouillage, telle que représentée sur la Figure 3, dans laquelle la plaque d'appui 20 peut être posée ou retirée du plateau d'appui 24 suivant la direction de déplacement D, une position intermédiaire représentée sur la Figure 4 et une position de verrouillage de la plaque d'appui 20 sur le plateau d'appui 24 et représentée sur la Figure 5.

En outre, il est prévu des moyens 45 de commande du crochet 40. Ces moyens de commande 45 comprennent des moyens de guidage 46 du crochet 40 entre ses positions de verrouillage et de déverrouillage, et des moyens d'entraînement 48 du crochet 40 entre ces deux positions.

Les moyens de guidage 46 du crochet comprennent deux bielles 50 parallèles au plan S. Ces bielles 50 sont articulées par rapport aux deux parois latérales 26 autour d'un deuxième axe A2. Ce deuxième axe A2 s'étend perpendiculairement au plan S. Le crochet 40 est articulé par rapport aux bielles 50 autour d'un troisième axe A3 par l'intermédiaire d'un dispositif 52 de réglage de position radial du crochet. L'axe A3 s'étend parallèlement au deuxième axe A2, et est décalé de celui-ci d'une distance d₁ illustrée sur la Figure 3. Cette distance d₁ est nettement inférieure à la longueur l du crochet.

Les deux axes A2 et A3 définissent un plan qui forme un angle α avec la direction D.

L'axe A1 du prolongement 44 définit un angle β avec la direction D.

La longueur radiale l du crochet 40 par rapport au troisième axe A3 est réglable par l'intermédiaire du dispositif de réglage radial 52. Ce dispositif 52 comprend un porte-crochet 54 articulé par rapport aux bielles 50 autour de l'axe A3 par deux ergots 56 représentés sur la Figure 2. Le porte-crochet 54 comporte un perçage 58 perpendiculaire à l'axe A3 et deux surfaces parallèles d'appui 60, 62 s'étendant parallèlement à l'axe A3 de part et d'autre de cet axe.

Le prolongement cylindrique 44 s'étend à travers le perçage 58. Il est fileté à son extrémité opposée de la portion 42. Le prolongement 44 comporte en outre en arrière du filetage un épaulement formant une butée d'arrêt du crochet 40. Un écrou 66 est vissé sur le filetage et limite le déplacement du crochet 40 radialement vers l'extérieur par rapport à l'axe A3. Cet écrou 66 définit donc, en fonction de sa position sur le prolongement 44, la longueur radiale l du crochet 40. Un organe élastique est entreposé entre le crochet 40 et le porte-crochet 54. Cet organe est formé par exemple, par deux rondelles Belleville 70 prises en sandwich entre deux rondelles 72, disposées entre l'épaulement 64 et la surface d'appui 60 du porte-crochet. En conséquence, la portion 42 en forme de crosse du crochet 40 est sollicitée élastiquement suivant l'axe A1 du prolongement cylindrique 44 à l'écart de l'axe A2 tout en étant libre d'être rapprochée de l'axe A3 sous l'action d'une sollicitation axiale suivant l'axe A1 appliquée sur le crochet 40.

Les moyens 46 de guidage du crochet comprennent en outre des moyens 74 d'arrêt du crochet, représentés sur la Figure 2. Ces moyens d'arrêt 74 comprennent une broche formant butée 76 fixée entre les deux bielles 50. Cette broche 76 s'étend parallèlement aux axes A2 et A3 et limite, dans la position de déverrouillage du crochet 40 (Figure 3), le basculement de celui-ci vers sa position de verrouillage. Les moyens d'arrêt 74 comprennent également une butée sous forme d'une languette 77 solidaire du boîtier 22. Cette languette 77 limite le basculement de la bielle 50 et définit la position de la bielle lorsque le crochet de trouve dans sa positon de verrouillage.

Par ailleurs, une surface formant came 78 est agencée sur le crochet 40 entre le prolongement 44 et la portion en forme de crosse 42. La surface formant came 78 est généralement convexe et s'applique contre l'oeillet 36 entre la position intermédiaire et une position proche de la position de verrouillage du crochet 40 (voir ci-après).

Un ressort 79 est disposé entre le boîtier 22 et le crochet 40 et sollicite ce dernier vers sa position de verrouillage.

Les moyens d'entraînement 48 du crochet comprennent un levier 80 articulé par rapport au boîtier 22 autour d'un quatrième axe A4 qui s'étend parallèlement aux deuxième A2 et troisième A3 axes à distance de ces derniers. Le levier 80 est mobile entre une position haute de déverrouillage (Figure 3) et une position basse de verrouillage (Figure 5). Le levier 80 est une pièce en forme de U, dont les branches latérales 82 s'étendent parallèlement au plan S. Une lumière de guidage 84 est ménagée dans chaque branche 82. Dans ces lumières s'étendent deux broches 86 solidaires des deux bielles 50. Sur une base 88 reliant les deux branches du levier 80 un bras d'actionnement télescopique 90 est fixé. Ce bras d'actionnement 90 est constitué de trois douilles 92, 94, 96 de diamètres complémentaires qui sont enfichées les unes dans les autres. Une poignée 98 est fixée, à l'extrémité libre du bras 90.

L'ensemble de liaison selon l'invention fonctionne de la façon suivante.

Initialement, l'ensemble 10 est en configuration de déverrouillage, représentée sur la Figure 3. L'arc de toit 8 vient d'être mis en place. La plaque d'appui 20 s'applique alors sur le plateau d'appui 24, et est positionnée par les languettes 32 et les encoches 30. L'oeillet 36 s'étend vers le bas à travers l'ouverture 38 du plateau d'appui 24. Le crochet 40 est en position de déverrouillage, c'est-à-dire qu'il est en dehors de l'oeillet 36.

L'angle α est égal à α1 et l'angle β est égal à β1. L'angle α1 est nettement supérieur à l'angle β1.

Le crochet 40 est sollicité contre la broche 76 par le ressort 79. En outre, le crochet 40 est maintenu dans sa position radialement extérieure par les rondelles Belleville 70. Le bras télescopique 90 est étendu et se trouve en position haute.

Afin de verrouiller l'arc de toit 8 sur le châssis 4, la poignée 98 est poussée vers le bas, dans le sens horaire sur la Figure 3, comme indiqué par la flèche F. En conséquence, le levier 80 entraîne les bielles 50 dans le sens horaire, de telle sorte que le troisième axe A3 soit entraîné vers le bas suivant un arc de cercle C, dans le sens horaire autour du deuxième axe A2. Lors de ce mouvement, les angles α et β diminuent, c'est-à-dire le prolongement 44 se déplace à l'écart du plateau 24 et se redresse vers la direction D.

Etant donné que la longueur l du crochet est supérieure à la distance d₁, l'écartement de l'axe A3 de l'oeillet 36 est surcompensé par le basculement du crochet.

Le crochet 40 effectue donc, dans un premier temps, un mouvement effectif qui a une composante dirigée vers l'oeillet 36 suivant la direction D. Lors de cette étape, le crochet 40 est guidé par la broche 76 et par le ressort 79.

Le déplacement du levier 80 est poursuivi jusqu'à une position intermédiaire dans laquelle les deux axes A2, A3 définissent un angle α2 avec la direction D. Dans cette position la surface formant came 78 entre en contact avec la surface inférieure de l'oeillet 36 à un point P, comme représenté sur la Figure 4, et la broche 76 s'éloigne du crochet. A partir de cette position, la position du crochet 40 et son inclinaison β2 sont déterminées par le troisième axe A3 et le point de contact P entre la surface formant came 78 et l'oeillet 36. Grâce à ce guidage « flottant » du crochet 40, des erreurs éventuelles de positionnement de l'oeillet 36 par rapport au crochet 40 sont compensées.

Lors de la poursuite du déplacement du crochet 40 sous l'action du levier 80, le dispositif de réglage radial 52 permet un déplacement de la portion 42 du crochet 40 par rapport à l'axe A3 radialement vers cet axe sous l'action de l'oeillet 36 agissant sur la surface formant came 78, et à l'encontre des rondelles Belleville 70. Un coincement ou un arc-boutement du crochet 40 sur l'oeillet 36 est évité du fait de la sollicitation continue de la surface formant came 78 contre l'oeillet 36.

Puis le crochet 40 bascule dans une position dans laquelle l'axe A1 s'étend suivant la direction D. Un basculement au-delà de cette position sollicite la portion 42 du crochet à l'écart du plateau d'appui 24, et sollicite ainsi la plaque 20 contre celui-ci.

Puis la bielle 50 bascule dans une position de point mort, dans laquelle le troisième axe A3 coïncide avec un axe PM et se trouve en vis-à-vis de l'oeillet 36, du côté opposé du deuxième axe A2. Dans cette position, les deux axes A2, A3 définissent un plan s'étendant parallèlement à la direction D.

Enfin, la bielle 50 bascule dans sa position de verrouillage, au-delà du point mort PM. Le porte-crochet 54 prend alors appui sur la languette 77 formant butée. Le fait que l'axe A3 se rapproche de nouveau du plateau 24, une fois le point mort PM franchi, est surcompensé par un basculement du crochet 40 d'un angle β3. L'oeillet 36 est donc sollicité vers le bas à l'écart du plateau 24, et en serrant la plaque d'appui 20 contre le plateau d'appui 24 (Figure 4).

Il est à noter que, grâce au fait que les axes A2 et A4 ne soient pas confondus, le basculement des bielles 50 est démultiplié par rapport au basculement du levier 80. Pour le mode de réalisation représenté, un basculement du levier 80 de 40° entraîne un basculement des bielles 50 de α₁ + α₃ = 30° environ. En conséquence, la force nécessaire pour actionner l'ensemble de liaison est relativement faible.

Par ailleurs, la branche d'extrémité de la portion 42 en forme de crosse du crochet 40 recouvrant l'oeillet 36 peut être longue, ce qui conduit à un recouvrement important de l'oeillet 36 par la portion 42 du crochet 40. En conséquence, la sûreté de l'ensemble de liaison 10 contre une libération intempestive de l'arc de toit 8 est importante.

En outre, le dispositif de réglage radial 52 permet d'éliminer un éventuel jeu présent entre le crochet 40 et l'oeillet 36 dans la position de verrouillage.

De plus, il est à noter que le dispositif selon l'invention est de construction simple et donc peu coûteux.

## Revendications

1. Ensemble de liaison libérable d'un premier organe de structure amovible (8) sur un second (4) organe de structure d'un véhicule automobile, l'ensemble comprenant :
- un premier et un second éléments de support (20, 22) adaptés pour être fixés respectivement au premier et au second organes de structure (4, 8), et pour s'appliquer l'un contre l'autre lorsque les deux organes de structure (4, 8) sont liés, ledit premier élément de support (20) comportant un organe d'accrochage (36);
- un crochet (40) comprenant une portion de coopération (42) avec l'organe d'accrochage (36) et étant relié audit second élément de support (22), ce crochet (40) étant mobile par rapport à ce second élément de support (22);
- des moyens (45) de commande du crochet, ces moyens de commande comprenant des moyens de guidage (46) du crochet (40), entre une position de verrouillage dans laquelle le crochet (40) est engagé dans l'organe d'accrochage (36), et une position de déverrouillage dans laquelle le crochet (40) est dégagé de l'organe d'accrochage (36) et en ce que les moyens de guidage (46) sont adaptés pour solliciter les deux éléments de support (20, 22) l'un contre l'autre lors de la fin du déplacement du crochet (40) vers sa position de verrouillage,
les moyens de guidage (46) du crochet (40) comprenant une bielle (50) articulée par rapport audit second élément de support (22) autour d'un premier axe (A2) et sur laquelle est articulé le crochet (40) autour d'un deuxième axe (A3), les deux axes (A2, A3) étant parallèles l'un à l'autre et perpendiculaires par rapport à une direction de déplacement (D), **caractérisé en ce que** le deuxième axe (A3) se trouve de part et d'autre d'un point mort (PM) lorsque le crochet (40) se trouve dans sa position de verrouillage respectivement dans sa position de déverrouillage, le point mort étant disposé sensiblement à l'opposé dudit premier axe (A2) par rapport à l'organe d'accrochage (36).

2. Ensemble suivant la revendication 1, **caractérisé en ce que** la distance (l) entre le deuxième axe (A3) et ladite portion de coopération (42) est nettement supérieure à la distance (d₁) entre les deux axes (A2, A3).

3. Ensemble suivant la revendication 1 ou 2, **caractérisé en ce que** les moyens de guidage (46) comprennent des moyens (74) d'arrêt du crochet, ces moyens d'arrêt empêchant un basculement du crochet (40) vers sa position de verrouillage lorsqu'il se trouve sensiblement dans sa position de déverrouillage.

4. Ensemble suivant la revendication 3, **caractérisé en ce que** les moyens d'arrêt (74), comprennent une butée mobile (76) portée par la bielle (50), butée sur laquelle le crochet (40) s'applique au moins lorsqu'il se trouve sensiblement dans sa position de déverrouillage.

5. Ensemble suivant l'une quelconque des revendications 3 ou 4, **caractérisé en ce que** les moyens de guidage (46) comprennent une surface formant came (78) disposée sur le crochet (40) et adaptée pour coopérer avec l'organe d'accrochage (36) lorsque le crochet (40) se déplace de sa position de déverrouillage vers sa position de verrouillage.

6. Ensemble selon les revendications 4 et 5 prises ensemble, **caractérisé en ce que** le crochet (40) est adapté pour s'appliquer sur la butée mobile (76) entre sa position de déverrouillage et une position intermédiaire de mise en prise du crochet et de l'organe d'accrochage (36), tandis qu'il est adapté pour coopérer avec la surface formant came (78) entre sa position intermédiaire et sa position de verrouillage.

7. Ensemble suivant l'une quelconque des revendications 1 à 6, **caractérisé en ce que** les moyens de commande (45) comprennent un organe élastique, notamment un ressort (79), qui sollicite le crochet (40) vers sa position de verrouillage.

8. Ensemble suivant l'une quelconque des revendications précédentes, **caractérisé en ce que**, lorsque le crochet (40) se trouve dans une position intermédiaire de mise en prise du crochet et de l'organe d'accrochage (36), le deuxième axe (A3) se trouve entre le point mort et sa position lorsque le crochet se trouve en position de déverrouillage.

9. Ensemble suivant l'une quelconque des revendications précédentes, **caractérisé en ce que** les moyens de commande (45) comprennent en outre des moyens d'entraînement (48) du crochet (40) entre ses deux positions de déverrouillage et de verrouillage, et **en ce que** les moyens d'entraînement (48) comprennent un levier d'actionnement (80) de la bielle (50) articulé par rapport audit second élément de support (22) autour d'un troisième axe (A4), qui s'étend parallèlement auxdits premier (A2) et deuxième axes (A3), et **en ce que** le levier d'actionnement (80) est relié à la bielle (50) par des moyens de démultiplication de rotation du levier par rapport à la bielle.

10. Ensemble suivant la revendication 9, **caractérisé en ce que** les moyens de démultiplication comprennent ledit troisième axe (A4) qui est distant desdits premier (A2) et deuxième axes (A3), et **en ce que** ces moyens comprennent une lumière de guidage (84) ménagée dans un des composants levier d'actionnement (80) ou bielle (50), ainsi qu'un ergot (86) coopérant avec la lumière de guidage (84) et fixé sur l'autre des composants levier d'actionnement (80) ou bielle (50) .

11. Ensemble suivant l'une quelconque des revendications 9 ou 10, **caractérisé en ce que** les moyens d'entraînement (48) comprennent un bras télescopique (90) fixé sur le levier d'actionnement (80).

12. Ensemble suivant l'une quelconque des revendications précédentes, **caractérisé en ce que** le crochet (40) est relié à la bielle (50) par des moyens (52) de réglage de la position radiale par rapport à ladite deuxième axe (A3).

13. Ensemble selon la revendication 12, **caractérisé en ce que** le crochet (40) est radialement mobile par rapport audit deuxième axe (A2) entre des positions radialement extérieure et intérieure de la portion de coopération (42), et **en ce que** les moyens (52) de réglage de la position radiale comprennent une butée (66) de réglage de la position extérieure et des moyens élastiques (72) sollicitant le crochet vers sa position extérieure.

14. Ensemble selon l'une quelconque des revendications précédentes, **caractérisé en ce qu**'il comprend en outre des moyens de positionnement (30, 32) desdits deux éléments de support. (20, 22) l'un par rapport à l'autre dans un plan sensiblement perpendiculaire à la direction de déplacement (D) lorsque la liaison est établie.

15. Ensemble selon l'une quelconque des revendications précédentes, **caractérisé en ce que** l'organe d'accrochage est une boucle d'accrochage (36).

16. Véhicule automobile comprenant un châssis (14) et un arc de toit (8), **caractérisé en ce que** l'arc de toit (8) est relié au châssis (4) au moyen d'un ensemble de liaison (10) selon l'une quelconque des revendications 1 à 15.

## Claims

1. Releasable connection assembly for a first structural element (8) which can be removed from a second structural element (4) of an automotive vehicle, with the assembly comprising:
- a first and second support element (20, 22) designed to be fixed respectively to the first and second structural elements (4, 8) and to be applied against each other when the two structural elements (4, 8) are connected, with the first support element (20) containing a coupling element (36);
- a hook (40) which includes a portion (42) which engages with the coupling element (36) and which is connected to the aforementioned second support element (22), with this hook (40) being capable of movement in relation to this second support element (22);
- means (45) of control of the hook, with these means of control including means of guidance (46) of the hook (40), between a locked position in which the hook (40) is engaged in the coupling element (36) and an unlocked position in which the hook (40) is released from the coupling element (36), and where the means of guidance (46) are designed to push the two support elements (20, 22) against one another during movement of the hook (40) towards its locked position,
- means of guidance (46) of the hook (40) which include a crank (50) which is articulated in relation to the second support element (22) around a first axis (A2) and on which the hook (40) is articulated around a second axis (A3), with both axes (A2, A3) being parallel to each other and perpendicular in relation to a direction of movement (D), **characterised by** the fact that the second axis (A3) is on either side of a dead centre (PM) when the hook (40) is in its locked position and in its unlocked position respectively, with the dead centre being effectively found on the other side of the said first axis (A2) in relation to the coupling element (36).

2. Assembly as described in claim 1, **characterised by** the fact that the distance (l) between the second axis (A3) and the aforementioned engagement portion (42) is markedly greater than the distance (d₁) between the two axes (A2, A3).

3. Assembly as described in claim 1 or 2, **characterised by** the fact that the means of guidance (46) include means (74) for stopping the hook, with these means of stopping the hook preventing the hook (40) from tipping towards its locked position when it is effectively in its unlocked position.

4. Assembly as described in claim 3, **characterised by** the fact that the means (74) for stopping the hook includes a moving end stop (76) carried by the crank (50) and which the hook (40) comes up against at least when it is effectively in its unlocked position.

5. Assembly as described in any of claims 3 or 4 whatsoever, **characterised by** the fact that the means of guidance (46) include a surface forming a cam (78) made on the hook (40) and which is designed to engage with the coupling element (36) when the hook (40) moves from its unlocked position to its locked position.

6. Assembly as described in claims 4 and 5 taken together, **characterised by** the fact that the hook (40) is designed to come up against the moving end stop (76) between its unlocked position and an intermediate engagement position of the hook and the coupling element (36), whilst it is designed to engage with the surface forming a cam (78) between its intermediate position and its locked position.

7. Assembly as described in any of claims 1 to 6 whatsoever, **characterised by** the fact that the means of control (45) include and elastic component, in particular a spring (79), which pushes the hook (40) towards its locked position.

8. Assembly as described in any of the preceding claims whatsoever **characterised by** the fact that when the hook (40) is in an intermediate engagement position of the hook and of the coupling element (36), the second axis (A3) is between the dead centre and its position when the hook is in its unlocked position.

9. Assembly as described in any of the preceding claims whatsoever, **characterised by** the fact that the means of control (45) includes in addition a means (48) for driving the hook (40) between its two locked and unlocked positions and by the fact that the means (48) for driving the hook include an actuating lever (80) for the crank (50) which is articulated in relation to the aforementioned second support element (22) around a third axis (A4), which extends parallel to the said aforementioned first (A2) and second (A3) axes, and by the fact that the actuating lever (80) is connected to the crank (50) by a means for reduction of the rotation of the lever in relation to the crank.

10. Assembly as described in claim 9, **characterised by** the fact that the means of reduction involves the aforementioned third axis (A4) which is at a distance from the aforementioned first (A2) and second (A3) axes, and by the fact that these means include a guide opening (84) made in one of the actuating lever (80) or crank (50) components, as well as an a spigot (86) with engages with the guide opening (84) and which is fixed onto the other of the actuating lever (80) or crank (50) components.

11. Assembly as described in any of claims 9 or 10 whatsoever, **characterised by** the fact that the means of driving (48) the hook include a telescopic arm (90) fixed to the actuating lever (80).

12. Assembly as described in any of the preceding claims whatsoever, **characterised by** the fact that the hook (40) is connected to the crank (50) by a means (52) for adjustment of the radial position relative to the aforementioned second axis (A3).

13. Assembly as described in claim 12, **characterised by** the fact that the hook (40) can move radially relative to the said aforementioned second axis (A2) between positions which are radially outside and inside the engagement portion (42), and by the fact that the means (52) of adjustment of the radial position include an end stop (66) for adjustment of the outer position and elastic means (72) which push the hook towards its outer position.

14. Assembly as described in any of the preceding claims whatsoever, **characterised by** the fact that it includes in addition means for positioning (30, 32) the aforementioned two support elements (20, 22) in relation to each other in a plane which is effectively perpendicular to the direction of motion (D) when a connection is made.

15. Assembly as described in any of the preceding claims whatsoever, **characterised by** the fact that the coupling element is a hooking loop (36).

16. Automotive vehicle made up of a chassis (14) and a roof arch (8) **characterised by** the fact that the roof arch (8) is linked to the chassis (4) by means of a connection assembly (10) as described in any of claims 1 to 15 whatsoever.

## Patentansprüche

1. Vorrichtung zum lösbaren Verbinden eines abnehmbaren Strukturbauteils (8) mit einem zweiten (4) Strukturbauteil eines Kraftfahrzeuges, wobei die Vorrichtung aufweist:
- ein erstes und ein zweites Halte-Element (20, 22) welche zum Festmachen an einem ersten bzw. an einem zweiten Strukturbauteil (4, 8) und zum aneinander Befestigen derselben angepasst sind, wenn die beiden Strukturbauteile (4, 8) verbunden sind, wobei das erste Halte-Element (20) ein Einhänge-Mittel (36) aufweist,
- einen Haken (40), welcher einen Abschnitt (42) zum Zusammenwirken mit dem Einhänge-Mittel (36) aufweist und an dem zweiten Halte-Element (22) befestigt ist, wobei der Haken (40) bezüglich des zweiten Halte-Elements (22) bewegbar ist,
- Mittel (45) zum Steuern des Hakens, wobei die Steuerungs-Mittel Mittel (46) zum Führen des Hakens (40) zwischen einer Verriegelungs-Position, in welcher der Haken (40) in das Einhänge-Mittel (36) eingekuppelt ist, und einer Entriegelungs-Position aufweisen, in welcher der Haken (40) von dem Einhänge-Mittel (36) entkuppelt ist, und wobei die Führungs-Mittel (46) zum Zwängen der beiden Halte-Elemente (20, 22) gegeneinander am Ende des Bewegens des Hakens (40) in seine Verriegelungs-Position angepasst sind,
wobei die Führungs-Mittel (46) des Hakens (40) einen Pleuel (50) aufweisen, welcher bezüglich des zweiten Halte-Elements (22) um eine erste Achse (A2) schwenkbar ist und über welchen der Haken (40) um eine zweite Achse (A3) schwenkbar ist, wobei die beiden Achsen (A2, A3) zueinander parallel und bezüglich einer Bewegungsrichtung (D) senkrecht sind, **dadurch gekennzeichnet, dass** sich die zweite Achse (A3), wenn der Haken (40) sich in seiner Verriegelungs- bzw. in seiner Entriegelungs-Position befindet, auf beiden Seiten von einem Totpunkt (PM) befindet, wobei der Totpunkt bezüglich des Einhänge-Mittels (36) im wesentlichen gegenüber der ersten Achse (A2) angeordnet ist.

2. Vorrichtung gemäß Anspruch 1, **dadurch gekennzeichnet, dass** der Abstand (l) zwischen der zweiten Achse (A3) und dem Zusammenwirk-Abschnitt (42) wesentlich größer als der Abstand (d₁) zwischen den beiden Achsen (A2, A3) ist.

3. Vorrichtung gemäß Anspruch 1 oder 2, **dadurch gekennzeichnet, dass** die Führungs-Mittel (46) Mittel (74) zum Sperren des Hakens aufweisen, wobei die Sperr-Mittel ein Kippen des Hakens (40) hin zu seiner Verriegelungs-Position verhindern, wenn er sich im wesentlichen in seiner Entriegelungs-Position befindet.

4. Vorrichtung gemäß Anspruch 3, **dadurch gekennzeichnet, dass** die Sperr-Mittel (74) einen bewegbaren Anschlag (76) aufweisen, welcher von dem Pleuel (50) gehaltenen ist und gegen welchen der Haken (40) sich wenigstens anlegt, wenn er sich im wesentliche in seiner Entriegelungs-Position befindet.

5. Vorrichtung gemäß irgendeinem der Ansprüche 3 oder 4, **dadurch gekennzeichnet, dass** die Führungs-Mittel (46) eine Fläche aufweisen, welche einen Nocken (78) bildet, welcher an dem Haken (40) angeordnet ist und zum Zusammenwirken mit dem Einhänge-Mittel (36) angepasst ist, wenn der Haken (40) aus seiner Entriegelungs-Position hin zu seiner Verriegelungs-Position bewegt wird.

6. Vorrichtung gemäß den beiden Ansprüchen 4 und 5, **dadurch gekennzeichnet, dass** der Haken (40) zum Anbringen an dem bewegbaren Anschlag (76) zwischen seiner Entriegelungs-Position und einer Zwischen-Position angepasst ist, in welcher der Haken und das Einhänge-Mittel (36) ineinandergreifen, wobei er zum Zusammenwirken mit der den Nocken (78) ausbildenden Fläche zwischen seiner Zwischen-Position und seiner Verriegelungs-Position angepasst ist.

7. Vorrichtung gemäß irgendeinem der Ansprüche 1 bis 6, **dadurch gekennzeichnet, dass** die Steuerungs-Mittel (45) ein elastisches Mittel, insbesondere eine Feder (79), aufweisen, welches den Haken (40) in seine Verriegelungs-Position zwängt.

8. Vorrichtung gemäß irgendeinem der vorhergehenden Ansprüche, **dadurch gekennzeichnet, dass**, wenn der Haken (40) sich in seiner Zwischen-Position befindet, in welcher der Haken und das Einhänge-Mittel (36) ineinandergreifen, sich die zweite Achse (A3) zwischen dem Totpunkt und seiner Position befindet, bei welcher der Haken sich in der Entriegelungs-Position befindet.

9. Vorrichtung gemäß einem der vorhergehenden Ansprüche, **dadurch gekennzeichnet, dass** die Steuerungs-Mittel (45) außerdem Mittel (48) zum Antreiben des Hakens (40) zwischen seinen beiden Entriegelungs- und Verriegelungs-Positionen aufweisen, und dass die Antriebs-Mittel (48) einen Hebel (80) zum Betätigen des Pleuels (50) aufweisen, welcher bezüglich des zweiten Halte-Elements (22) um eine dritte Achse (A4) schwenkbar ist, welche sich parallel zu der ersten Achse (A2) und der zweiten Achse (A3) erstreckt, und dass der Betätigungs-Hebel (80) an dem Pleuel (50) mittels Mitteln zum Übersetzen der Drehung des Hebels bezüglich des Pleuels befestigt ist.

10. Vorrichtung gemäß Anspruch 9, **dadurch gekennzeichnet, dass** die Übersetzungs-Mittel die dritte Achse (A4) aufweisen, welche von der ersten (A2) und der zweiten Achse (A3) im Abstand angeordnet ist, und dass die Mittel ein Führungs-Langloch (84) aufweisen, welches in einem der Komponenten, dem Betätigungs-Hebel (80) oder dem Pleuel (50), ausgenommen ist, so dass ein Zapfen (86) mit dem Langloch (84) zusammenwirkt und an einem der Komponenten, dem Betätigungs-Hebel (80) öder dem Pleuel (50), befestigt ist.

11. Vorrichtung gemäß irgendeinem der Ansprüche 9 oder 10, **dadurch gekennzeichnet, dass** die Antriebs-Mittel (48) einen Teleskop-Arm (90) aufweisen, welcher an dem Betätigungshebel (80) befestigt ist.

12. Vorrichtung gemäß irgendeinem der vorhergehenden Ansprüche, **dadurch gekennzeichnet, dass** der Haken (40) an dem Pleuel (50) mittels Mitteln (52) zum Einstellen der Radial-Position bezüglich der zweiten Achse (A3) befestigt ist.

13. Vorrichtung gemäß Anspruch 12, **dadurch gekennzeichnet, dass** der Haken (40) bezüglich der zweiten Achse (A2) am Zusammenwirk-Abschnitt (42) zwischen Außen- und Innen-Radial-Positionen radial bewegbar ist, und dass die Mittel (52) zum Einstellen der Radial-Position einen Anschlag (66) zum Einstellen der Außen-Position und elastische Mittel (72) aufweisen, welche den Haken hin zu der Außen-Position zwängen.

14. Vorrichtung gemäß irgendeinem der vorhergehenden Ansprüche, **dadurch gekennzeichnet, dass** sie außerdem Mittel (30, 32) zum gegenüberliegenden Positionieren der beiden Halte-Elemente (20, 22) in einer Ebene aufweist, welche im wesentlichen senkrecht zur Bewegungs-Richtung (D) ist, wenn die Verbindung hergestellt ist.

15. Vorrichtung gemäß irgendeinem der vorhergehenden Ansprüche, **dadurch gekennzeichnet, dass** das Einhänge-Mittel ein Einhänge-Bügel (36) ist.

16. Kraftfahrzeug, welches ein Fahrgestell (4) und ein Bogendach (8) aufweist, **dadurch gekennzeichnet, dass** das Bogendach (8) an dem Fahrgestell (4) mittels einer Verbindungs-Vorrichtung (10) gemäß irgendeinem der vorhergehenden Ansprüche 1 bis 15 befestigt ist.
